# EUROPEAN PATENT APPLICATION

(11) **EP 2 364 835 A2**
(43) Date of publication of application: **14.09.2011**
(21) Application number: 11157629.4
(22) Date of filing: 10.03.2011
(51) Int. Cl.: B29C 59/14, B29B 13/02, B05D 3/14

(54) **Surface treatment method**

(30) Priority: 12.03.2010 JP 2010056220
(71) Applicant: Fujifilm Corporation, Minato-ku Tokyo (JP)
(72) Inventor: Umemori, Kenichi, Kanagawa (JP)
(74) Representative: HOFFMANN EITLE

(57) **Abstract**

A surface treatment method, which is capable of continuously and efficiently performing high quality surface treatment that can improve adhesion between a substrate and a functional layer by preventing oligomers from oozing out onto the substrate surface with the passage of time from surface treatment when performing surface treatment on the surface of a polyester substrate using an atmospheric-pressure plasma treatment, is provided. The method comprises an atmospheric-pressure plasma step for treating the surface of the substrate by atmospheric-pressure plasma, and a heating step for heating the surface of the substrate to a temperature exceeding the glass transition temperature Tg before the atmospheric-pressure plasma treatment step.

## Description

### BACKGROUND OF THE INVENTION

The present invention relates to a surface treatment method for treating the surface of a substrate using atmospheric-pressure plasma.

Currently, various functional films (functional sheets) including gas barrier films, protective films, and optical films such as optical filters and antireflection films are used in various devices including display devices such as liquid crystal display devices and organic EL display devices, optical elements, semiconductor devices, and thin-film solar cells.

Such functional films are generally fabricated by forming a functional layer on the surface of a substrate (base, support body) formed of a polyester or the like, by a vacuum deposition technique such as a coating, spattering, and plasma-enhanced CVD methods.

Such functional films are used in circumstances of prolonged heating, for example, in liquid crystal displays. When a functional film is heated for a long time, however, there is concern that the functional layer may separate from the substrate. Depending on the usage of the functional film, the functional layer may need to be formed on a substrate, such as a fluororesin, with which the functional layer does not have good adhesion with the substrate.

Therefore, when adhesion between the substrate and the functional layer is a problem, methods have been proposed for treating the surface of the substrate by an atmospheric-pressure plasma treatment prior to forming the functional layer as a method for improving adhesion.

For example, JP 3765190 B discloses that at least one surface of a continuously fed polyester substrate (supporting body) of less than 80% crystallinity is subjected to gas discharge plasma treatment under an atmospheric pressure of 500 to 800 Torr, wherein the surface treatment is performed by introducing an inert gas containing argon gas at 50% or greater in pressure, and performing the treatment at 50 W x min/m² or greater and less than 500 W x min/m². In order to reduce curling of the substrate, JP 3765190 B also discloses heating the substrate to a temperature range of -30 to 0% of the polyester glass transition temperature Tg (K) prior to plasma treatment.

JP 3288228 B discloses performing surface treatment by providing a solid dielectric body having a specific inductive capacity of 10 or greater (in 25°C environment) at least at one of the opposing surfaces of the opposing pair of electrodes and disposing a substrate (base) between one electrode and the solid dielectric body or between the solid dielectric bodies, and treating the substrate surface by plasma discharge generated between the pair of electrodes by applying a pulsed electric field with an electric field intensity of 1 to 40 kV/cm and pulse width of 100 to 800 µs.

### SUMMARY OF THE INVENTION

According to investigations by the present inventors, when using a polyester as the substrate, it was understood that oligomers present on the substrate surface reduce adhesion between the substrate and the functional layer.

In contrast, as indicated in JP 3765190 B and JP 3288228 B, surface treatment by atmospheric-pressure plasma can decompose the oligomers present on the surface of the substrate, thereby enabling to improve the adhesion between the substrate and the functional layer.

However, according to the investigations of the present inventors, in the method of surface treatment by a simple atmospheric-pressure plasma treatment as disclosed in JP 3288228 B and in the method of surface treatment by an atmospheric-pressure plasma treatment after heating the substrate to less than the glass transition temperature Tg prior to the atmospheric-pressure plasma treatment as disclosed in JP 3765190 B, although the oligomers present on the substrate surface can be removed at the time of treatment, it is understood that, with the passage of time, oligomers present inside the vicinity of the substrate surface might ooze out onto the surface of the substrate. That is, in surface treatment by the atmospheric-pressure plasma treatment, adhesion between the substrate and the functional layer is improved temporarily, but adhesion decreases with the passage of time between the substrate and the functional layer.

An object of the present invention is to eliminate the problems of the above conventional art by providing a surface treatment method which, when performing the surface treatment of the surface of a polyester substrate by an atmospheric-pressure plasma treatment, can efficiently and continuously perform a high quality surface treatment that improves adhesion between the substrate and the functional layer by preventing oligomers from oozing out onto the substrate surface with the passage of time from the surface treatment.

To solve these problems, the present invention provides a surface treatment method for performing an atmospheric-pressure plasma treatment on a lengthy polyester substrate while feeding in the longitudinal direction, the surface treatment method comprising: an atmospheric-pressure plasma step for performing surface treatment on the substrate by atmospheric-pressure plasma, and before the atmospheric-pressure plasma step, a heating step for heating the substrate so that the surface temperature of at least one side of the substrate exceeds the glass transition temperature Tg.

In this case, it is preferred that treatment intensity of the atmospheric-pressure plasma step is 3 kJ/m² or greater, and the power density is 40 kV/cm or greater.

Further, in the atmospheric-pressure plasma step, it is preferred that the atmospheric-pressure plasma treatment is performed by disposing an impedance matching circuit and a pulse control element between the electrode pair and the power source. In addition, when the power source applies a voltage between the electrodes, the pulse control element preferably generates at least one voltage pulse during a half cycle, and a displacement current pulse between the electrodes is generated with the generation of the voltage pulse.

It is also preferred that the pulse control element includes at least a choke coil.

The heating time of the substrate in the heating step is preferably 0.5 to 300 seconds.

Also in the heating step, it is preferred that the substrate surface temperature is heated to Tg +0°C - Tg +40°C.

In addition, the heating method of the substrate in the heating step is preferably blowing heated dry air onto the substrate.

Alternatively, the heating method of the substrate in the heating step is preferably by using a contact type heating roller or non-contact type heater.

After the atmospheric-pressure plasma step, it is preferred that a cooling step of the substrate is included.

In addition, the cooling method of the substrate in the cooling step is preferably blowing cold air.

Alternatively, the cooling method of the substrate in the cooling step is preferably by using a contact type cooling roller.

After the atmospheric-pressure plasma step, it is preferable a coating step for forming an easy-adhesion layer on the substrate is included.

In the atmospheric-pressure plasma step, it is also preferable that the gas used in the plasma treatment includes nitrogen gas.

According to the present invention, when performing atmospheric-pressure plasma treatment to a lengthy polyester substrate while feeding the substrate in the longitudinal direction, by including a heating step prior to the atmospheric-pressure plasma step to heat the substrate so the surface temperature of at least one side of the substrate exceeds the glass transition temperature Tg, oozing out of the oligomers onto the surface of the substrate can be prevented, even with the passage of time from the surface treatment by atmospheric-pressure plasma treatment, thereby high quality surface treatment that improves adhesion between the substrate and the functional layer can be efficiently and continuously performed.

### BRIEF DESCRIPTION OF THE DRAWINGS

FIG. 1 is a schematic view showing an embodiment of a surface treatment device for implementing the surface treatment method of the present invention; and
FIG. 2 is a schematic view illustrating the plasma treatment part of the surface treatment device shown in FIG. 1.

### DETAILED DESCRIPTION OF THE INVENTION

Next, the surface treatment method of the present invention is described in detail based on the preferred embodiments shown in the accompanying drawings.

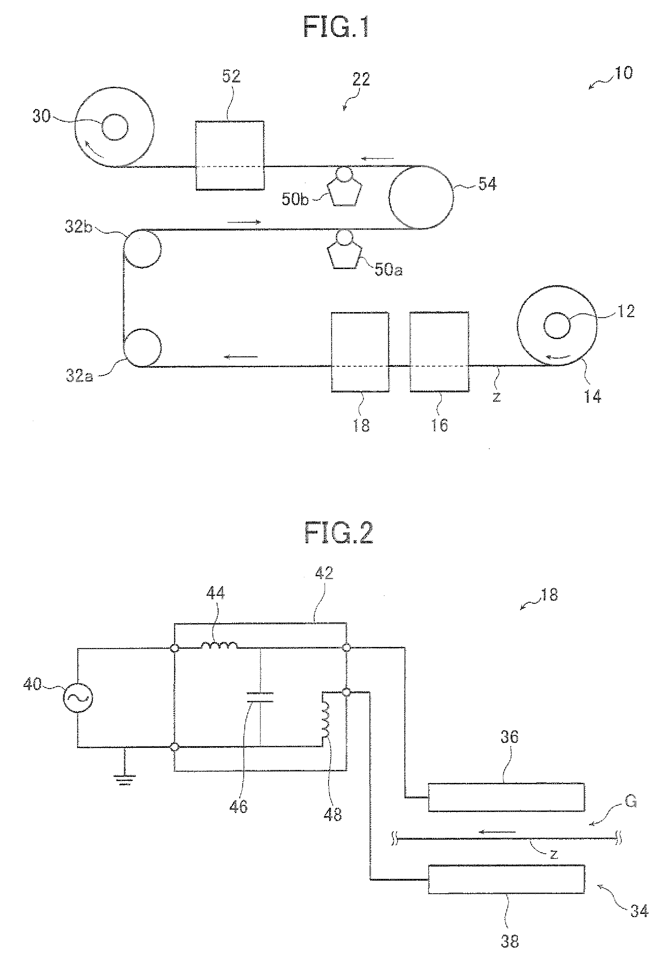

FIG. 1 is a schematic view showing an embodiment of a surface treatment device for implementing the surface treatment method of the present invention.

The surface treatment device 10 illustrated in FIG. 1 is a device that can perform surface treatment by an atmospheric-pressure plasma treatment on the surface of a lengthy substrate Z (film base) while feeding the substrate in the longitudinal direction.

This surface treatment device 10 is a device for performing film formation by a so-called roll-to-roll system wherein the lengthy substrate Z is fed from a substrate roll 14 having the substrate Z wound into a roll, surface treatment is performed on the substrate Z while feeding in the longitudinal direction, and the surface treated substrate Z is wound into a roll.

The surface treatment device 10 has a coating part 22 disposed on the downstream side in the feeding direction of the substrate Z, and forms a functional layer on the substrate Z after the surface treatment.

The surface treatment device 10 has a rotary shaft 12, thermal treatment means 16, a plasma treatment part 18, a coating part 22, and a winding shaft 30.

Note that in the present invention, the substrate Z is a lengthy film-like material formed of polyester, as exemplified by PET (polyethylene terephthalate) film and PEN (polyethylene naphthalate) film.

In the surface treatment device 10, the lengthy substrate Z is fed from the substrate roll 14, and while feeding in the longitudinal direction along a predetermined feeding path, the substrate Z is subjected to thermal treatment by the thermal treatment means 16 and to the surface treatment in the plasma treatment part 18, a functional layer is formed in the coating part 22, and then the substrate Z is wound (in a roll) on the winding shaft 30.

In the thermal treatment device 10, the thermal treatment means 16 heats the surface of the substrate Z to a temperature exceeding the glass transition temperature Tg of the substrate Z (polyester) prior to surface treatment by the plasma treatment part 18.

In the example shown in the drawing, the thermal treatment means 16 heats the surface of the substrate Z to a temperature exceeding Tg by blowing hot air on both sides of the substrate Z.

The substrate Z that has been heated by the thermal treatment means 16 is fed to the plasma treatment part 18.

Prior to performing surface treatment by the atmospheric-pressure plasma treatment described later, oligomers (hereinafter, referred to as internal oligomers) present inside the vicinity of the surface of the substrate Z ooze out onto the surface by heating the substrate Z to a temperature exceeding the glass transition temperature Tg. After the internal oligomers have oozed out onto the surface of the substrate Z, surface treatment is performed in the atmospheric-pressure plasma treatment to prevent internal oligomers from oozing out onto the surface of the substrate Z with the passage of time from the surface treatment, and thereby a reduction in adhesion between the substrate Z and the functional layer is prevented.

This point will be described in detail later.

The thermal treatment means 16 preferably heats the substrate Z for a time of 0.5 to 300 seconds.

When the heating time is 0.5 seconds or more, the internal oligomers ooze out sufficiently onto the surface, and the oozing of the oligomers due to heating can be inhibited by drying means 52 or the like in post treatment. Moreover, setting the heating time to less than 300 seconds can prevent damage on the substrate Z due to the heating, thereby avoiding the elongation of the base.

The heating temperature of the substrate Z is more preferably Tg + 0°C to Tg + 40°C. By setting the heating temperature of the substrate Z to this range, the internal oligomers can be advantageously oozed out onto the surface of the substrate Z and reduction in adhesion can be suppressed.

Note that the heating temperature of the substrate Z is lower than the softening point Ts of the polyester.

Although the thermal treatment means 16 heats the substrate Z by blowing hot air as illustrated in the drawing, the present invention is not limited to this arrangement since various known heating means may be used. The use of a contact type heating roller or non-contact heater is preferred.

The heat-treated substrate Z by the thermal treatment means 16 is fed to the plasma treatment part 18.

The plasma treatment part 18 is the portion for performing surface treatment of the heat-treated substrate Z by an atmospheric-pressure plasma treatment.

FIG. 2 is a schematic view illustrating the plasma treatment part 18 of the surface treatment device 10. As shown in FIG. 2, the plasma treatment part 18 has a high voltage electrode 36, a ground electrode 38, a power source 40, and a matching circuit 42.

The high voltage electrode 36 and the ground electrode 38 form an electrode pair 34 for generating atmospheric-pressure plasma.

The high voltage electrode 36 and the ground electrode 38 are known components used in atmospheric-pressure plasma treatment devices, for example, stainless steel plate-like members whose mutually opposed surfaces are covered by a dielectric body (insulator).

The high voltage electrode 36 and the ground electrode 38 are disposed parallel to the substrate Z with separated by a predetermined distance so as to sandwich therebetween the substrate Z fed on the predetermined feeding path. Between the high voltage electrode 36 and the ground electrode 38, a gas G used for plasma treatment (hereinafter, referred to as "plasma gas G") is supplied from gas supplying means (not shown). That is, a pace between the high voltage electrode 36 and the ground electrode 38 is provided for generating plasma.

In the surface treatment device 10, the plasma gas G is supplied between the high voltage electrode 36 and the ground electrode 38, and plasma generating power (plasma excitation power) is supplied between the high voltage electrode 36 and the ground electrode 38 to generate plasma between the electrodes. This plasma performs surface treatment of the surface of the substrate Z fed between the high voltage electrode 36 and the ground electrode 38.

As disclosed in JP 3765190 B and JP 3288228 B, surface treatment of the substrate by atmospheric-pressure plasma treatment can improve adhesion between the substrate and the functional layer formed on the substrate.

However, simply performing surface treatment of the substrate by atmospheric-pressure plasma treatment does not necessarily provide sufficient adhesion.

As previously mentioned, according to investigations by the present inventors, when using polyester as the substrate, it is understood that oligomers present on the substrate surface reduce adhesion between the substrate and the functional layer.

Additionally, in the method of surface treatment by simply performing an atmospheric-pressure plasma treatment as disclosed in JP 3288228 B and in the method of surface treatment by performing an atmospheric-pressure plasma treatment after heating the substrate to less than the glass transition temperature Tg as disclosed in JP 3765190 B, although the oligomers present on the substrate surface can be decomposed by the surface treatment in the atmospheric-pressure plasma treatment, it is understood that, with the passage of time from the surface treatment, oligomers present inside the vicinity of the surface of the substrate Z will ooze out onto the surface of the substrate Z.

Therefore, even when the functional layer is formed on the surface of the substrate Z after performing surface treatment, it is known that the adhesion between the substrate Z and the functional layer reduces with the passage of time due to the effect of internal oligomers oozed out.

In contrast, in the surface treatment method of the present invention, when performing the surface treatment on a lengthy polyester substrate by an atmospheric-pressure plasma treatment while feeding the substrate in the longitudinal direction, the substrate is heated to a temperature exceeding Tg prior to the surface treatment to ooze out the internal oligomers onto the surface of the substrate Z.

By performing the surface treatment after heating the substrate Z exceeding Tg and oozing out the internal oligomers onto the surface of the substrate Z, not only the oligomers present on the surface of the substrate Z but also the internal oligomers oozed out onto the surface of the substrate Z can be decomposed. That is, the number of internal oligomers present inside the vicinity of the surface of the substrate Z can be reduced.

By decomposing the oligomers at the surface of the substrate Z that inhibit adhesion between the substrate Z and the functional layer, when the functional layer is formed on the substrate Z after surface treatment, adhesion between the substrate Z and the functional layer can be improved.

In addition, by heating the substrate Z to a temperature exceeding Tg prior to surface treatment, oozing out of internal oligomers onto the surface of the substrate Z can be suppressed even with the passage of time from the surface treatment. Accordingly, after the functional layer is formed on the substrate Z, it is possible to prevent reduced adhesion between the substrate Z and the functional layer caused by internal oligomers oozed out with the passage of time.

Any known gas may be used as the plasma gas G depending on the surface treatment required. Examples of plasma gases include oxygen gas, nitrogen gas, hydrogen gas, helium, neon, argon, and xenon used alone or in combination. Note that using nitrogen gas is preferable for reasons of realizing both cost reduction and treatment performance.

In order to generate an atmospheric-pressure plasma, the power source 40 applies a voltage (supplies power for plasma generation (plasma excitation power)) to the electrode pair 34 (between the ground electrode 38 and the high voltage electrode 36).

In the present invention, the power source 40 is not particularly limited and various known power sources used in surface treatment devices for performing surface treatment by atmospheric-pressure plasma may be used. The power source 40 preferably is a power source which oscillates sinusoidal power at a single frequency, more preferably is a power source operating at a frequency of 1 kHz or greater, even more preferably operates at 10 kHz or greater, and ideally operates at 100 kHz or greater.

The power source 40 is connected to the electrode pair 34 (the ground electrode 38 and the high voltage electrode 36) through the matching circuit 42. Note that, in the surface treatment device 10, the power circuit comprising the power source 40 and the matching circuit 42 is grounded between the matching circuit 42 on the ground electrode 38 side and the power source 40.

The matching circuit 42 performs impedance matching between the power source 40 and the electrode pair 34 to reduce the power reflection returning from the electrode pair 34 to the power source 40.

In the illustrated example, the matching circuit 42 is configured by a matching coil 44 connected in series with the electrode pair 34, a capacitor (impedance) 46 connected in parallel with the electrode pair 34, and a choke coil 48 as a pulse control element connected in series with the matching coil 44 so as to sandwich the electrode pair 34.

Regarding atmospheric-pressure plasma, in order to generate a plasma, the distance between the electrode pair 34 must be shortened and a sufficiently large output power for generating plasma must be applied between the electrode pair 34. Therefore, abnormal discharging such as an arc discharge becomes liable to occur between the electrode pair 34, and there is concern that such abnormal discharging may damage the substrate Z.

In contrast, the matching circuit 42 stabilizes the discharge of atmospheric-pressure plasma generated between the electrode pair 34, thereby the damage of the substrate Z is prevented.

In addition, when the output (discharge intensity, power density) of the atmospheric-pressure plasma treatment is increased to enhance productivity, plasma generation becomes unstable between the electrode pair 34 to make arc discharge readily occur. However, a glow discharge can be generated and stabilized by stabilizing the discharge of the atmospheric-pressure plasma generated between the electrode pair 34 by the matching circuit 42. Thus, damage to the substrate Z by abnormal discharge can be prevented, thereby a high-quality surface treatment with high productivity can be performed.

Preferably the discharge intensity as the output of the atmospheric-pressure plasma treatment is 3 kJ/m² or greater and less than 200 kJ/m², and more preferably is less than 100 kJ/m². The power density is preferably 40 kV/cm or greater and less than 100 kV/cm.

By setting the output of the atmospheric-pressure plasma treatment in this range, damage to the substrate Z is more suitably prevented and high-quality surface treatment can be performed with high productivity.

Note that the voltage application area (/m²) of the electrodes represents the area in which range the discharge occurs.

In the present invention, when a voltage is applied to excite plasma at the electrode pair 34, the pulse control element generates at least one pulse voltage in a half cycle to generate a displacement current pulse between the electrode pair 34, thereby suppressing abnormal discharge and stabilizing the plasma.

As a pulse control element, the choke coil 48 incorporated in the matching circuit 42 is suitable as specifically illustrated in FIG. 2.

Such a pulse control element (that is, a matching circuit built in a pulse control element, and a power circuit with a power source and matching circuit) is disclosed in JP 2007-520878 A and JP 2009-506496. The manufacturing method of the present invention may use any pulse control element and power circuit disclosed in these two patent application publications.

Further, in the manufacturing method of the present invention, various known matching circuits in addition to the configuration disclosed in the exemplary drawings and the above patent application publications can be used as the matching circuit.

Although the plasma treatment part 18 uses two parallel flat plates as the electrode pair 34 and performs surface treatment while feeding the substrate Z between the electrode pair 34, the present invention is not limited to this configuration since a drum and a flat plate may be used as the electrode pair so that surface treatment is performed while winding the substrate Z on the circumferential surface of the drum.

In the plasma treatment part 18, the surface-treated substrate Z is guided by the guide rollers 32a and 32b and fed to the coating part 22.

The coating part 22 is a portion for forming an easy-adhesion layer by coating the surface of the surface-treated substrate Z.

The coating part 22 has coating means 50 (50a and 50b), drying means 52, and a guide roller 54.

The coating means 50a coats a paint of an easy-adhesion layer on one surface of the fed substrate Z, and is disposed so that its longitudinal direction is perpendicular to the feeding direction of the substrate Z and parallel to the substrate Z.

The coating means 50a coats a paint of an easy-adhesion layer on the surface of the substrate Z. Various known coating means such as a bar coater, a roll coater, and a doctor knife may be used as the coating means 50a. In the illustration, the coating means 50a applies a layer of paint with a bar coater.

In regard to this point, the coating means 50b is also identical.

The guide roller 54 is disposed on the downstream side of the coating means 50a, and contacts the surface of the substrate Z on the side opposite to the surface coated with paint by the coating means 50a while feeding the substrate Z along a predetermined path.

The coating means 50b applies paint to the surface of the substrate Z on the side opposite the surface coated with paint by the coating means 50a at the downstream side of the guide roller 54, and is disposed so that its longitudinal direction is perpendicular to the feeding direction of the substrate Z and parallel to the substrate Z.

Drying means 52 dries the paint of the easy-adhesion layer applied on both surfaces of the substrate Z by the coating means 50a and 50b at the downstream side of the coating means 50b.

Various known drying means such as drying means by heating may be used as the drying means 52.

As the material of the easy-adhesion layer applied by coating means 50, a hydrophilic polymer compound is preferably used. Examples of useful hydrophilic polymer compound include polyvinyl alcohol derivatives (such as polyvinyl alcohol, vinyl acetate-vinyl alcohol copolymer, polyvinyl acetal, polyvinyl formal, polyvinyl benzal and the like), natural polymers (such as gelatin, casein, gum arabic and the like), hydrophilic polyester derivatives (such as partially-sulfonated polyethylene terephthalate and the like), hydrophilic polyvinyl derivatives (such as poly-N-vinylpyrrolidone, polyacrylamide, polyvinyl indazole, polyvinyl pyrazole and the like), and the like, used either alone or in combination with two or more.

The easy-adhesion layer formed on the substrate Z by the coating part 22 has improved adhesion when combined with another base. Roughening of the surface of the layer is effective to improve adhesion. Therefore, adding fine particles of less than 1.0 µm to the easy-adhesion layer is preferred.

Inorganic and organic fine particles may be used as the fine particles added to the easy-adhesion layer. Examples of useful inorganic fine particles include silicon oxide, titanium oxide, aluminum oxide, zinc oxide, tin oxide, calcium carbonate, barium sulfate, talc, kaolin, calcium sulfate, and the like.

Examples of useful organic fine particles include poly (meta) acrylate resin, silicone resin, polystyrene resin, polycarbonate resin, acrylic-styrene resin, benzoguanamine resin, melamine resin, as well as polyolefin resin, polyester resin, polyamide resin, polyimide resin, polyethylene fluoride resin, and the like.

These fine particles are preferably silicon oxides such as silica, for example, Sylysia, a product of Fuji Silysia Chemical Ltd., and Nipsil E, a product of Tosoh Silica Corporation.

In the coating part 22, the substrate Z with the formed easy-adhesion layer is fed to the winding shaft 30 to be wound in a roll by the winding shaft 30 and supplied to the next step as a functional film roll.

The operation of the surface treatment device 10 is described below.

As described above, upon mounting of the substrate roll 14 on the rotary shaft 12, the substrate Z is pulled out from the substrate roll 14 and is passed along the predetermined feeding path including the thermal treatment means 16, the plasma treatment part 18, the guide roller 32, and the coating part 22 to reach the winding shaft 30.

When the substrate Z is inserted, feeding of the substrate Z starts and the thermal treatment means 16 is actuated to start thermal treatment of the substrate Z. In the plasma treatment part 18, plasma gas G is supplied between the electrode pair 34 and the power source 40 is actuated to start surface treatment of the substrate Z. In addition, in the coating part 22, formation of the easy-adhesion layer on the substrate Z begins.

As previously mentioned, since prior to surface treatment by an atmospheric-pressure plasma treatment the substrate Z is heated to a temperature exceeding the glass transition temperature Tg to ooze out the internal oligomers onto the substrate Z, the surface treatment by the plasma treatment part 18 not only decompose the oligomers present on the surface of the substrate Z but also decompose the internal oligomers that have oozed out onto the surface of the substrate Z. Therefore, even with the passage of time from surface treatment, internal oligomers can be suppressed from oozing out onto the surface of the substrate Z, and adhesion between the substrate Z and the easy-adhesion layer (functional layer) is prevented from decreasing with the passage of time.

In the surface treatment device 10 illustrated in FIG. 1, both surfaces of the substrate Z are subjected to thermal treatment at a temperature exceeding Tg prior to the surface treatment; however, the present invention is not limited to this arrangement since a single surface of the substrate Z may be subjected to thermal treatment at a temperature exceeding Tg prior to the surface treatment.

Although, in the surface treatment device 10, the coating part 22 is disposed downstream from the plasma treatment part 18, the present invention is not limited to this arrangement since a part having another function also may be so disposed, for example, cooling means for cooling the substrate Z may be disposed between the plasma treatment part and the coating part.

Since the substrate Z is heated to a temperature exceeding Tg and softened by the thermal treatment means, there is concern the substrate Z may stretch and deform under the tension during feeding. Therefore, the substrate Z is cooled after plasma treatment so that the substrate Z is at a temperature lower than Tg to prevent the substrate Z from elongating under tension during feeding and, thereby suppressing the deformation of the film.

Various known cooling means may be used as the cooling means, for example, cooling means for blowing cold air, contact type cooling roller, and the like can be used.

Although, in the surface treatment device 10, the coating part 22 for forming an easy-adhesion layer is disposed downstream from the plasma treatment part 18, the present invention is not limited to this arrangement since a part for forming another functional layer, such as a part for forming a hard-coat layer on the surface of the substrate Z, may also be so disposed.

For example, a part for forming a hard-ccat layer may have coating means for coating a hard-coat layer material on the substrate Z, drying means for drying the applied material, and ultraviolet irradiating means for hardening the dried film.

Although, in the surface treatment device 10, the functional layer (easy-adhesion layer) is formed by coating, the present invention is not limited to this arrangement since a functional layer may also be formed by vacuum deposition techniques such as spattering and plasma-enhanced CVD. The surface treatment device also may have a plurality of such functional layer forming means.

### Working examples

Next, the present invention is described in further detail by referring to the following specific working examples.

### [Working example 1]

The surface treatment device 10 illustrated in FIG. 1 was used for performing surface treatment of the substrate Z and formation of the functional layer.

The substrate Z used was a PET film (FQ150, Fuji Film Corporation) with 1200 mm in width and 150 µm in thickness. The glass transition temperature of the substrate Z is 80°C.

Note that the length of the substrate Z subjected to treatment was 3500 m.

### Thermal treatment

A hot air blowing device (TSK-81B, Taketsuna Manufactory Co., Ltd.) was used as the thermal treatment means. The hot air temperature was set to 85°C, feeding speed to 10 m/min, and the hot air was blown on the substrate Z at 1 m intervals, that is, at 6-second intervals.

### Surface treatment

A 1% mixture of oxygen gas in nitrogen gas was used as the plasma gas G in the surface treatment by atmospheric-pressure plasma treatment. The length of the electrode pair 34 in the feeding direction of the substrate Z was 1300 mm, and the feeding speed was 10 m/min.

The frequency of the power source used in the atmospheric-pressure plasma treatment was 150 kHz, the power density was 40 kV/cm, and the discharge intensity was 4 kJ/m².

A 2 mH coil was used as the matching coil 44 of the matching circuit 42, a 30 pF capacitor was used as the capacitor 46, and a 1 mH choke coil was used as the choke coil.

### Easy-adhesion layer

In the coating part 22, paint material comprising a mixture of distilled water (95%), polyester resin (4%), and crosslinking agent Elastron H-3 (1%), a product of Dai-Ichi Kogyo Seiyaku Co., Ltd. was applied using a coating bar, and dried by drying means set to 180°C. The thickness of the formed easy-adhesion layer was 0.4 µm.

In this working example, a hard-coat layer was also formed on the substrate Z after the easy-adhesion layer was formed.

That is, in this working example, in addition to the coating part 22 for applying an easy-adhesion layer as a functional layer, a second coating part for applying a hard-coat layer was provided downstream from drying means 52 of the coating part 22 to form a hard-coat layer over the easy-adhesion layer.

The second coating part applies a hard-coat layer material by coating means, dries the material by drying means, and thereafter hardens the film by ultraviolet irradiation to form a hard-coat layer.

### Hard-coat layer

In the second coating part, a paint material comprising a mixture of light curing resin (DPCA20, Nippon Kayaku Co., Ltd.) (50 wt%), methylethyl ketone (49 wt%), and photopolymerization initiator (Irgacure, Ciba-Geigy) (1 wt%) was applied using a coating bar, then dried by drying means set to 80°C, and subsequently subjected to ultraviolet irradiation at 1200 mJ/cm² to form a 5 µm thick hard-coat layer to produce the functional film.

### [Working examples 2 and 3]

The temperature of the thermal treatment was set to 100°C (Working example 2).

The temperature of the thermal treatment was set to 120°C (Working example 3). Other than the above, similar to working example 1, treatment was performed in the surface treatment device to form an easy-adhesion layer, and thereafter form a hard-coat layer to produce the functional film.

### [Comparison examples 1 and 2]

The temperature of the thermal treatment was set to 70°C (Comparison example 1).

Thermal treatment was not performed (temperature of the substrate was 25°C) (Comparison example 2). Other than the above, similar to working example 1, treatment was performed in the surface treatment device to form an easy-adhesion layer, and thereafter form a hard-coat layer to produce the functional film.

The following adhesion evaluations were performed for each produced functional film.

### Adhesion evaluation

One side of two-sided adhesive tape (No. 502, product of Nitto Denko Corporation) was adhered to the substrate Z after treatment, that is, to the surface of the functional film, then the substrate Z was cut in a 50 x 300 mm section, and the two-sided tape was separated therefrom, to measure the adhesion between the substrate Z and the easy-adhesion layer. In separating the two-sided tape, an Instron type tension testing device was used, and the tape was separated at a tension speed set to 300 mm/min and separation angle of 180°. Measurements were performed immediately after treatment, and after leaving the treated sample for 1 hour in an atmosphere with 50% relative humidity and temperature of 23°C.

Separation of the substrate Z and the easy-adhesion layer was scored as [good] when there was no separation, [poor] when the area of the separated part was 1/2 or more, and [bad] when there was complete separation.

The evaluation results are shown below in Table 1.

**[Table 1]**

| | Thermal treatment temperature | Adhesion | |
|---|---|---|---|
| | | Immediately after treatment | After 1 hour |
| Working example 1 | 85°C | Good | Good |
| Working example 2 | 100°C | Good | Good |
| Working example 3 | 120°C | Good | Good |
| Comparison example 1 | 70°C | Good | Poor |
| Comparison example 2 | - | Poor | bad |

As shown in Table 1 above, in all cases of the working examples of the present invention, in which prior to the surface treatment by the atmospheric-pressure plasma treatment the substrate Z is heated at a temperature exceeding the glass transition temperature Tg, there was no separation of the substrate Z and easy-adhesion layer formed after surface treatment, even after kept for 1 hour after treatment and, hence the adhesion between the easy-adhesion layer and the substrate Z was improved.

In contrast, comparison example 1 in which the substrate Z was heated below the glass transition temperature Tg prior to surface treatment, and comparison example 2 in which thermal treatment was not performed prior to surface treatment, in both cases have separation of the easy-adhesion layer and the substrate Z after Kept for 1 hour after treatment.

The above results clearly show the beneficial effects of the present invention.

## Claims

1. A surface treatment method of performing an atmospheric-pressure plasma treatment using an atmospheric-pressure plasma on long lengths of a polyester substrate while feeding in a longitudinal direction of said polyester substrate, comprising:
an atmospheric-pressure plasma step of performing a surface treatment on said polyester substrate by said atmospheric-pressure plasma treatment; and
before said atmospheric-pressure plasma step, a heating step of heating said polyester substrate so that a surface temperature of at least one side of said polyester substrate exceeds a glass transition temperature Tg.

2. The surface treatment method according to claim 1, wherein a treatment intensity of said atmospheric-pressure plasma step is 3 kJ/m² or greater, and a power density of said atmospheric-pressure plasma step is 40 kV/cm or greater.

3. The surface treatment method according to claim 1 or 2, wherein said atmospheric-pressure plasma treatment is performed by disposing an impedance matching circuit and a pulse control element between a pair of electrodes for generating said atmospheric-pressure plasma and a power source for supplying a electric power to said pair of electrodes in said atmospheric-pressure plasma step.

4. The surface treatment method according to claim 3, wherein when said power source applies a voltage between said pair of electrodes, said pulse control element generates at least one voltage pulse during a half cycle, and a displacement current pulse between said pair of electrodes is generated with the generation of the at least one voltage pulse.

5. The surface treatment method according to claim 3 or 4, wherein said pulse control element includes at least a choke coil.

6. The surface treatment method according to claim 1 to 5, wherein a heating time of said polyester substrate in said heating step ranges from 0.5 to 300 seconds.

7. The surface treatment method according to claim 1 to 6, wherein said surface temperature of said polyester substrate in said heating step ranges from Tg +0°C to Tg +40°C.

8. The surface treatment method according to claim 1 to 7, wherein said polyester substrate in said heating step is heated by blowing heated dry air onto said polyester substrate.

9. The surface treatment method according to claim 1 to 7, wherein said polyester substrate in said heating step is heated by using a contact type heating roller or non-contact type heater.

10. The surface treatment method according to claim 1 to 9, further comprising a cooling step of cooling said polyester substrate after said atmospheric-pressure plasma step.

11. The surface treatment method according to claim 10, wherein said polyester substrate in said cooling step is cooled by blowing cold air.

12. The surface treatment method according to claim 10, wherein said polyester substrate in said cooling step is cooled by using a contact type cooling roller.

13. The surface treatment method according to claim 1 to 12, further comprising a coating step of forming an easy-adhesion layer on said polyester substrate after said atmospheric-pressure plasma step.

14. The surface treatment method according to claim 1 to 13, wherein a gas used in said atmospheric-pressure plasma treatment in said atmospheric-pressure plasma step includes nitrogen gas.
